# EUROPÄISCHE PATENTANMELDUNG

(11) **EP 3 557 708 A1**
(43) Veröffentlichungstag der Anmeldung: **23.10.2019**
(21) Anmeldenummer: 19168537.9
(22) Anmeldetag: 10.04.2019
(51) Int. Cl.: H02B 13/025

(54) **SCHALTSCHRANK MIT VERBESSERTER ANORDNUNG EINER KURZSCHLUSSEINRICHTUNG**

(30) Priorität: 17.04.2018 DE 102018109016
(71) Anmelder: Eaton Intelligent Power Limited, Dublin 4 (IE)
(72) Erfinder: WEIGL, Franz, 3961 Waldenstein (AT); GATTRINGER, Thomas, 3970 Weitra (AT)
(74) Vertreter: Eaton IP Group EMEA

(57) **Zusammenfassung**

Es wird ein Schaltschrank (1) angegeben, welcher einen Rahmen (2) umfasst, der mehrere Rahmenprofile (2a..2l) aufweist und in eine im Wesentlichen quaderförmige Außenkontur des Schaltschranks (1) eingeschrieben ist. Zudem umfasst der Schaltschrank (1) mehrere innerhalb des Rahmens (2) verlaufende Stromschienen (3) mit einem Gesamtquerschnitt (Q) von wenigstens 300 mm² und zumindest eine Kurzschlusseinrichtung (5) zum Löschen eines Lichtbogens. Die Kurzschlusseinrichtung (5) ist dabei in einem an die Stromschienen (3) angrenzenden Aufnahmebereich angeordnet, welcher sich in Richtung zu einer nächst gelegenen Quaderfläche (A, D, E, F) der quaderförmigen Außenkontur des Schaltschranks (1) erstreckt. Darüber hinaus wird ein modulares System angegeben, umfassend einen ersten Schaltschrank (1) mit zumindest einer in dem genannten Aufnahmebereich angeordneten Kurzschlusseinrichtung (5) und einen zweiten Schaltschrank ohne eine solche Kurzschlusseinrichtung (5).

## Beschreibung

### TECHNISCHES GEBIET

Die Erfindung betrifft einen Schaltschrank, welcher einen Rahmen aufweist, der mehrere Rahmenprofile umfasst und in eine im Wesentlichen quaderförmige Außenkontur des Schaltschranks eingeschrieben ist. Zudem umfasst der Schaltschrank mehrere innerhalb des Rahmens verlaufende und mehreren Phasen zugeordnete Stromschienen mit einem Gesamtquerschnitt von wenigstens 300 mm² und zumindest eine Kurzschlusseinrichtung zum Löschen eines Lichtbogens (insbesondere zwischen zumindest zwei der Phasen oder zwischen zumindest einer der Phasen und einem Nullleiter), welches mit den Stromschienen elektrisch verbunden ist. Die Stromschienen weisen dabei eine Längserstreckung auf, und Stromschienen unterschiedlicher Phasen sind in einer dazu normal ausgerichteten Quererstreckung nebeneinander angeordnet. Durch die genannte Längserstreckung und die genannte Quererstreckung ist eine erste Zugangsebene definiert, in welcher die Stromschienen aller Phasen liegen. Sofern die Stromschienen innerhalb des Rahmens enden, ist auch eine zweite Zugangsebene definiert, die entlang der genannten Längserstreckung und einer normal auf die diese Längserstreckung und die genannte Quererstreckung verlaufenden (Hoch)richtung ausgerichtet ist. In dieser zweiten Zugangsebene liegen ebenfalls die Stromschienen aller Phasen. Optional weist der Schaltschrank auch ein innerhalb des Rahmens angeordnetes, elektrisches Schaltgerät auf, welches mit den Stromschienen elektrisch verbunden ist. Zudem betrifft die Erfindung ein modulares System, welches einen ersten Schaltschrank und einen zweiten Schaltschrank umfasst, wobei die Schaltschränke jeweils einen Rahmen aufweisen und wobei jeder Rahmen mehrere Rahmenprofile umfasst und in eine im Wesentlichen quaderförmiger Außenkontur des Schaltschranks eingeschrieben ist. Die Schaltschränke umfassen darüber hinaus jeweils mehrere innerhalb des Rahmens verlaufende Stromschienen mit einem Gesamtquerschnitt von wenigstens 300 mm². Die Stromschienen weisen dabei eine Längserstreckung auf, und Stromschienen unterschiedlicher Phasen sind in einer dazu normal ausgerichteten Quererstreckung nebeneinander angeordnet. Durch die genannte Längserstreckung und die genannte Quererstreckung ist eine erste Zugangsebene definiert, in welcher die Stromschienen aller Phasen liegen. Sofern die Stromschienen innerhalb des Rahmens enden, ist auch eine zweite Zugangsebene definiert, die entlang der genannten Längserstreckung und einer normal auf die diese Längserstreckung und die genannte Quererstreckung verlaufenden (Hoch)richtung ausgerichtet ist. In dieser zweiten Zugangsebene liegen ebenfalls die Stromschienen aller Phasen. Optional weisen der erste und der zweite Schaltschrank wiederum jeweils ein innerhalb des Rahmens angeordnetes, elektrisches Schaltgerät auf, welches mit den Stromschienen elektrisch verbunden ist.

### STAND DER TECHNIK

Schaltschränke und modulare Systeme der genannten Art sind aus dem Stand der Technik grundsätzlich bekannt. Nachteilig an den bekannten Lösungen ist, dass sie relativ viel Platz im Schaltschrank benötigen und nicht oder nur sehr schwer nachgerüstet werden können. Zudem ist die Kurzschlusseinrichtung nicht bei allen Lösungen leicht zugänglich, da sie häufig hinter anderen Einbauten im Schaltschrank angeordnet ist. Üblicherweise sind die Stromschienen ja direkt benachbart zu einer Gehäusewand des Schaltschranks angeordnet, um möglichst viel zusammenhängenden Raum für andere Einbauten im Schaltschrank zu haben. Nachdem die Kurzschlusseinrichtung in der Regel in der Nähe der Stromschienen angeordnet ist, liegen daher andere Einbauten über der Kurzschlusseinrichtung. Diese Einbauten müssen entfernt werden, wenn eine Kurzschlusseinrichtung getauscht werden soll. Häufig sind auch aufwändige Montageplatten und/oder Schottungen zur Anordnung der Kurzschlusseinrichtung innerhalb des Schaltschrankes notwendig. Ein Tausch der Kurzschlusseinrichtung ist nach dem Stand der Technik daher mit hohem Aufwand verbunden.

### OFFENBARUNG DER ERFINDUNG

Eine Aufgabe der Erfindung ist es daher, einen verbesserten Schaltschrank sowie ein verbessertes modulares System anzugeben. Insbesondere soll eine platzsparende, leicht zugängliche und leicht nachrüstbare Möglichkeit für eine Kurzschlusseinrichtung angegeben werden.

Die Aufgabe der Erfindung wird mit einem Schaltschrank der eingangs genannten Art gelöst, bei dem die Kurzschlusseinrichtung in einem Aufnahmebereich angeordnet ist, welcher in Richtung zur nächst gelegenen, im Wesentlichen parallel zu der ersten Zugangsebene oder im Wesentlichen parallel zu der zweiten Zugangsebene ausgerichteten Quaderfläche der quaderförmigen Außenkontur des Schaltschranks an die Stromschienen angrenzt.

Die Aufgabe der Erfindung wird auch mit einem modularen System der eingangs genannten Art gelöst, bei dem
- der erste Schaltschrank zumindest eine Kurzschlusseinrichtung zum Löschen eines Lichtbogens aufweist, welche mit den Stromschienen elektrisch verbunden ist und welche in einem Aufnahmebereich angeordnet ist, welcher in Richtung zur nächst gelegenen, im Wesentlichen parallel zu der ersten Zugangsebene oder im Wesentlichen parallel zu der zweiten Zugangsebene ausgerichteten Quaderfläche der quaderförmigen Außenkontur des ersten Schaltschranks an die Stromschienen angrenzt, und
- der zweite Schaltschrank ohne eine in diesem Bereich angeordnete Kurzschlusseinrichtung aufgebaut ist.

Die erste Zugangsebene und die optionale zweite Zugangsebene definieren Ebenen, in denen alle über die Stromschienen geführten Phasen von einer Seite (nämlich in einer Richtung normal auf die erste/zweite Ebene) zugänglich sind, wodurch die Kurzschlusseinrichtung leicht an die Stromschienen angebunden werden kann. Eine Richtung eines in den Stromschienen fließenden Stroms ist parallel oder annähernd parallel zu der ersten Zugangsebene und normal auf die optionale zweite Zugangsebene ausgerichtet.

Die zumindest eine Kurzschlusseinrichtung kann vorteilhaft
a) an einer Oberseite des Schaltschranks oder
b) an einer Rückseite des Schaltschranks oder
c) an einer Seitenfläche des Schaltschranks angeordnet sein.

Insbesondere kann in diesem Zusammenhang vorgesehen sein, dass
- die Stromschienen im Fall a) im obersten Viertel des Rahmens angeordnet sind und die zumindest eine Kurzschlusseinrichtung oberhalb der Stromschienen angeordnet ist oder
- die Stromschienen im Fall b) im hintersten Viertel des Rahmens angeordnet sind und die zumindest eine Kurzschlusseinrichtung hinter den Stromschienen angeordnet ist oder
- die Stromschienen im Fall c) in einem einer Seitenwand des Schaltschranks zugewandten Viertel des Rahmens angeordnet sind und die zumindest eine Kurzschlusseinrichtung seitlich neben den Stromschienen angeordnet ist.

Weiterhin kann bevorzugt vorgesehen sein, dass die zumindest eine Kurzschlusseinrichtung im Fall a) direkt oberhalb, im Fall b) direkt hinter und im Fall c) direkt neben den Stromschienen positioniert ist. Bevorzugt ist die zumindest eine Kurzschlusseinrichtung auch direkt mit den Stromschienen elektrisch verbunden.

Der Begriff "direkt" bedeutet im gegebenen Zusammenhang, dass zwischen den Stromschienen und der Kurzschlusseinrichtung keine weiteren Komponenten angeordnet sind (z.B. "direkt oberhalb positioniert") beziehungsweise keine weiteren Komponenten in dem von den Stromschienen zur Kurzschlusseinrichtung führenden Strompfad angeordnet sind ("direkt verbunden"). Alternativ kann diese Variante somit dadurch formuliert werden, dass die Kurzschlusseinrichtung oberhalb der Stromschienen / hinter den Stromschienen / neben den Stromschienen positioniert ist, wobei zwischen den Stromschienen und der Kurzschlusseinrichtung keine weiteren Komponenten angeordnet sind und/oder die Kurzschlusseinrichtung mit den Stromschienen elektrisch verbunden ist, wobei keine weiteren Komponenten in dem von den Stromschienen zur Kurzschlusseinrichtung führenden Strompfad angeordnet sind.

Positionsangaben, wie zum Beispiel "oberhalb", "hinter" und "neben" beziehen sich auf die normale Gebrauchslage, in welcher der Schaltschrank betrieben wird. Diese ist insbesondere dadurch gekennzeichnet, dass eine Tür des Schaltschranks an dessen Vorderseite angeordnet und dort über eine vertikal verlaufende Drehachse schwenkbar gelagert ist.

Ein "Rahmenprofil" ist in der Regel ein allgemein zylindrischer Teil des Rahmens, dessen Längserstreckung wenigstens zehnmal größer ist als dessen Erstreckung in den beiden verbleibenden Dimensionen. Ein Rahmenprofil weist demgemäß zwei Endflächen auf, zwischen denen sich Erzeugende des Rahmenprofils erstrecken. Insbesondere kann der Querschnitt des Rahmenprofils gleichschenkelig oder ungleichschenkelig L-förmig sein (also als Winkelprofil ausgebildet sein), U-förmig sein, oder auch gleichseitig oder ungleichseitig rechteckrohrförmig sein. Beispielsweise kann ein Rahmenprofil gezogen, stranggepresst oder aus einem Blechzuschnitt gebogen sein. Insbesondere gebogene Rahmenprofile können Laschen und dergleichen aufweisen, wodurch das Rahmenprofil geringfügig von der allgemein zylindrischen Form abweichen kann. Insbesondere erstrecken sich solche von der allgemeinen Zylinderform abweichenden Abschnitte über einen Bereich, der kürzer als 10% der Länge des Rahmenprofils ist.

Auf dem Rahmen können Paneele oder Wände angebracht sein, welche die Außenkontur des Schaltschranks bilden, wodurch ein abgeschlossener Hohlraum entsteht. Bei einem Schaltschrank, der einen offenen Boden aufweist, entsteht der geschlossene Hohlraum erst dann, wenn der Rahmen auf einem ebenen Boden steht. Insbesondere kann der Schaltschrank der Norm IEC 61439 "Low-voltage switchgear and controlgear assemblies" und/oder IEC 60529 "Schutzarten durch Gehäuse (IP-Code)" entsprechen.

In die Außenkontur des Schaltschranks "eingeschrieben" bedeutet im gegebenen Zusammenhang, dass der Rahmen Elemente berührt, welche die Außenkontur des Schaltschranks bilden. Dem obigen Beispiel folgend, berührt der Rahmen also Paneele oder Wände, welche die Außenkontur des Schaltschranks bilden.

Eine "im Wesentlichen quaderförmige Außenkontur des Schaltschranks" weicht maximal 10% von der Quaderform ab und ist insbesondere dadurch gekennzeichnet, dass das Volumen des kleinsten Quaders, der dem Rahmen umschrieben werden kann, wenigstens 90% des von der Außenkontur des Schaltschranks eingeschlossenen Volumens beträgt. Wie stark die Außenkontur des Schaltschranks an eine Quaderform angenähert ist, kann also über das Volumenverhältnis der beiden genannten Volumina beschrieben werden. Weicht die Außenkontur des Schaltschranks stark von der Quaderform ab, dann kann das genannte Volumenverhältnis unterschritten werden.

Im Umkehrschluss bedeutet dies auch eine Mindestgröße für den Rahmen. Unter dem "Rahmen" ist im Zusammenhang der Erfindung also nicht jegliche aus Profilen geformte Struktur zu verstehen, sondern nur jene, welche in die Außenkontur des Schaltschranks eingeschrieben ist beziehungsweise unmittelbar im Bereich der Außenkontur des Schaltschranks liegt.

Im einfachsten Fall sind die Rahmenprofile entlang der Kanten der im Wesentlichen quaderförmige Außenkontur des Schaltschranks angeordnet, respektive im Wesentlichen parallel dazu. Einige Rahmenprofile können aber auch etwas nach innen verschoben sein.

Generell bedeutet die Angabe "im Wesentlichen parallel" im Rahmen dieser Erfindung eine Abweichung von maximal 10°zu einer parallelen Ausrichtung.

Denkbar ist auch, dass eine Schaltschrankanordnung aus mehreren aneinandergereihten Einzelschaltschränken beziehungsweise Schaltschrankmodulen aufgebaut ist. In diesem Fall sind auch mehrere Einzelrahmen beziehungsweise Rahmenmodule aneinandergereiht und bilden im Verbund den Rahmen für die genannte Schaltschrankanordnung. Auch dieser Rahmen ist aus mehreren Rahmenprofilen aufgebaut, und auch hier weicht eine "im Wesentlichen quaderförmige Außenkontur der Schaltschrankanordnung" maximal 10% von der Quaderform ab und ist insbesondere dadurch gekennzeichnet, dass das Volumen des kleinsten Quaders, der dem Rahmen umschrieben werden kann, wenigstens 90% des von der Außenkontur der Schaltschrankanordnung eingeschlossenen Volumens beträgt.

Eine "Kurzschlusseinrichtung zum Löschen eines (Stör)Lichtbogens" umfasst insbesondere Schalter zum Schließen einer Verbindung niedriger Impedanz zwischen Leitern auf unterschiedlichem Spannungspotential, zwischen denen ein (Stör)Lichtbogen brennt. Ein Schließen des Schalters oder der Schalter hat einen Kurzschluss zwischen den genannten Leitern und damit ein rasches Löschen des Lichtbogens zur Folge. Zudem verursacht der Kurzschluss auch sehr hohe Ströme in den Zuleitungen, welche in Folge einen übergeordneten Überstromschalter auslösen, der letztlich die gefährdete Stelle von einem Versorgungsnetz trennt. Denkbar ist aber auch, dass die Kurzschlusseinrichtung selbst die gefährdete Stelle vom Versorgungsnetz trennt, insbesondere durch zusätzliche in der Kurzschlusseinrichtung vorhandene Trennschalter.

Allgemein können beispielsweise Tiere oder auch herunterfallendes Werkzeug sowie (feuchter) Schmutz die Isolation beziehungsweise die Funkenstrecke zwischen zwei Leitern auf unterschiedlichem Spannungspotential derart herabsetzen, dass ein Lichtbogen entsteht. Dies kann heftige Explosionen aufgrund der sich in kurzer Zeit aufheizenden Luft verursachen. Die Kurzschlusseinrichtung soll beispielsweise Menschen im Bereich des Schaltschranks und/oder die den Schaltschrank selbst vor den zerstörerischen Auswirkungen eines Störlichtbogens schützen oder wenigstens dessen Auswirkungen abmildern.

Beispielsweise kann das Auftreten eines Störlichtbogens durch die Messung des über die elektrischen Leiter fließenden Stroms und die Detektion des emittierten Lichts, das von dem Lichtbogen ausgeht, festgestellt werden. Sind beide Kriterien erfüllt, dann kann von einem brennenden Lichtbogen ausgegangen werden. Die zugehörige Sensorik, also zum Beispiel Strommeßsensoren und lichtempfindliche Sensoren können direkt in der Kurzschlusseinrichtung angeordnet sein oder (zumindest teilweise) extern angeordnet und mit der Kurzschlusseinrichtung verbunden sein.

Denkbar ist weiterhin, dass die Lichtbogenerkennungseinrichtung zusätzlich einen Alarm ausgibt, zum Beispiel optisch und/oder akustisch. Denkbar wäre auch das Absetzen einer entsprechenden Alarmmeldung über eine drahtgebundene oder drahtlose Schnittstelle.

Die Schalter zum Erzeugen eines Kurschlusses und zum Trennen der Verbindung zu einem Versorgungsnetz können insbesondere als Halbleiterschalter ausgebildet sein, beispielsweise als Transistoren oder Thyristoren. Grundsätzlich wäre auch die Ausführung als elektromechanische Relais denkbar, allerdings wird elektronischen Schaltern wegen der deutlich höheren Auslösegeschwindigkeit in der Regel der Vorzug gegeben. Wegen der hohen auftretenden Ströme kann mit der Kurzschlusseinrichtung häufig nur ein Lichtbogen gelöscht werden, oder es können gegebenenfalls einige wenige Lichtbogen gelöscht werden, bevor die Kurzschlusseinrichtung ausgetauscht oder zwecks Austausch der genannten Schalter gewartet werden muss.

Ein Vorteil der Erfindung liegt nun in der vergleichsweise einfach zu realisierenden Anbindung der Kurzschlusseinrichtung an die Stromschienen. Durch die genannten Maßnahmen ist auch der Zugang zu der Kurzschlusseinrichtung auf einfache Weise möglich, beispielsweise von oben, von hinten oder von der Seite her. Insbesondere wenn keine weiteren oberhalb der Kurzschlusseinrichtung, hinter der Kurzschlusseinrichtung beziehungsweise neben der Kurzschlusseinrichtung liegenden, Komponenten elektrisch mit den Stromschienen verbunden sind, müssen dazu keine weiteren Komponenten innerhalb des Schaltschranks entfernt werden.

Die durch die vorgeschlagenen Maßnahmen erzielte einfache Zugänglichkeit zu der Kurzschlusseinrichtung ermöglicht somit einen einfachen Austausch beziehungsweise eine einfache Wartung der Kurzschlusseinrichtung. Der Schaltschrank kann nach einem Fehlerfall daher wieder schnell in Betrieb genommen werden.

Die genannten Vorteile werden insbesondere durch Abkehr von einer Bauweise erreicht, bei der sich lediglich ein (einziger) zusammenhängender Raum für Einbauten auf einer Seite der Stromschienen befindet. Stattdessen wird die Kurzschlusseinrichtung eigentlich an der von diesem Raum abgewandten Seite der Stromschienen angeordnet. Die Erfindung kann daher insbesondere auch in der Erkenntnis gesehen werden, dass der Einbau einer Kurzschlusseinrichtung außerhalb eines eigentlich für Einbauten (und daher auch für eine Kurzschlusseinrichtung) vorgesehenen "Einbauraums" von Vorteil ist.

Ein weiterer Vorteil besteht darin, dass die Kurzschlusseinrichtung durch die vorgeschlagenen Maßnahmen leicht in bestehenden Schaltschränken nachgerüstet werden kann. Auch hier ist es wiederum von besonderem Vorteil, wenn keine weiteren oberhalb der Kurzschlusseinrichtung, hinter der Kurzschlusseinrichtung beziehungsweise neben der Kurzschlusseinrichtung liegenden, Komponenten elektrisch mit den Stromschienen verbunden sind.

Der Schaltschrank kann so ausgeführt sein, dass die zumindest eine Kurzschlusseinrichtung vollständig innerhalb des Rahmens angeordnet ist. Ist der Rahmen an der betreffenden Seite mit einer Gehäusewand abgedeckt, dann ist die Kurzschlusseinrichtung vollständig zwischen den Stromschienen und der den Stromschienen nächst gelegenen, im Wesentlichen parallel zu der ersten Zugangsebene oder im Wesentlichen parallel zu der zweiten Zugangsebene ausgerichteten Gehäusewand des Schaltschranks angeordnet.

Denkbar ist aber auch, dass die zumindest eine Kurzschlusseinrichtung wenigstens teilweise über den Rahmen hinausragt. Der Rahmen des Schaltschranks kann im Hinblick auf seine Größe dann so ausgeführt sein, dass keine oberhalb der Stromschienen, hinter den Stromschienen oder neben den Stromschienen positionierte Kurzschlusseinrichtung vollständig innerhalb des Rahmens aufgenommen werden kann, insbesondere wenn die Stromschienen im obersten / hintersten / seitlichsten Bereich des Rahmens angeordnet beziehungsweise durch den Schaltschrank hindurch geführt sind. Diese Bauweise deckt die meisten in der Praxis auftretenden Anwendungsfälle ab. Soll der Schaltschrank auch eine Kurzschlusseinrichtung aufweisen, so ragt diese über den Rahmen hinaus.

Insgesamt ermöglicht die Erfindung eine platzsparende Anordnung einer Kurzschlusseinrichtung in einem Schaltschrank. Die Kurzschlusseinrichtung kann leicht in bestehenden Schaltschränken nachgerüstet werden, ist leicht zugänglich und leicht auszutauschen. Aufwändige Montageplatten und/oder Schottungen zur Anordnung der Kurzschlusseinrichtung innerhalb des Schaltschrankes sind in der Regel nicht notwendig.

An dieser Stelle wird auch angemerkt, dass im Schaltschrank auch ein Nullleiter vorgesehen sein kann, der eine Stromschiene oder mehrere Stromschienen umfasst. Die Kurzschlusseinrichtung kann mit dem Nullleiter elektrisch verbunden sein und daher auch einen Kurzschluss zwischen einer Phase und dem Nullleiter erzeugen, oder die Kurzschlusseinrichtung ist trotz vorhandenem Nullleiter lediglich mit den Phasen eines Wechselspannungssystems verbunden. Durch Erzeugen eines Kurzschlusses zwischen den genannten Phasen wird aber auch dann ein zwischen einer Phase und dem Nullleiter brennender Lichtbogen gelöscht, wenn die Kurzschlusseinrichtung nur mit den Phasen des Wechselspannungssystems, nicht jedoch mit dem Nullleiter elektrisch verbunden ist.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn die elektrische Verbindung zwischen der zumindest einen Kurzschlusseinrichtung und den Stromschienen mit Flachprofilen hergestellt ist. Diese Leiter weisen einen im Wesentlichen rechteckigen Querschnitt auf und können in Längsrichtung gerade oder bogenförmig verlaufen oder aber auch im Längsverlauf einfach oder mehrfach abgewinkelt sein. Beispielsweise kann die elektrische Verbindung zwischen der zumindest einen Kurzschlusseinrichtung und den Stromschienen mit einem Flachprofil hergestellt sein, das in seinem Längsverlauf eine Abkantung um 90° aufweist. Die mit den Flachprofilen realisierte elektrische Verbindung zwischen der Kurzschlusseinrichtung und den Stromschienen ist nicht nur langlebig, sondern auch sehr kostengünstig. Zudem weist sie im Allgemeinen einen nur geringen ohmschen Widerstand auf und ist mit hohen Strömen belastbar, weswegen sich diese Art der Verbindung insbesondere für eine Kurzschlusseinrichtung zum Löschen eines Lichtbogens eignet. Bevorzugt ist eine Kurzschlusseinrichtung zum Löschen eines Lichtbogens auch direkt mit den Stromschienen elektrisch verbunden. Ein im Wesentlichen rechteckiger Querschnitt ist insbesondere dadurch gekennzeichnet, dass sich eine Abschrägung oder Abrundung an dem betreffenden Rechteck maximal 20% über eine Längskante des Rechtecks erstreckt.

Besonders vorteilhaft ist es auch, wenn die elektrische Verbindung zwischen der zumindest einen Kurzschlusseinrichtung und den Stromschienen mit starren elektrischen Leitern hergestellt ist. Auf diese Weise kann ein Teil des Gewichts oder auch das gesamte Gewicht der Kurzschlusseinrichtung von den Stromschienen getragen werden. Unter "starren" elektrischen Leitern sind insbesondere solche Leiter zu verstehen, die von Hand ohne Hilfsmittel nicht plastisch verformbar sind.

Besonders vorteilhaft ist es in diesem Zusammenhang auch, wenn das Gewicht der zumindest einen Kurzschlusseinrichtung im Wesentlichen von den Stromschienen getragen wird. "Im Wesentlichen" bedeutet in diesem Zusammenhang mehr als die Hälfte. Das heißt, dass mehr als die Hälfte des Gewichts der Kurzschlusseinrichtung von den Stromschienen getragen wird. Insbesondere kann das Gewicht der Kurzschlusseinrichtung auch zur Gänze von den Stromschienen getragen werden. Die Kurzschlusseinrichtung kann dann frei von einer (weiteren) Befestigung am Rahmen sein.

Denkbar ist aber auch, dass das Gewicht der zumindest einen Kurzschlusseinrichtung im Wesentlichen vom Rahmen getragen wird. Bei dieser Variante ist die Kurzschlusseinrichtung (auch) am Rahmen befestigt. Beispielsweise ist die Kurzschlusseinrichtung auf einem Befestigungswinkel montiert, welcher mit dem Rahmen des Schaltschrankes verbunden ist. "Im Wesentlichen" bedeutet in diesem Zusammenhang wiederum, dass mehr als die Hälfte des Gewichts der Kurzschlusseinrichtung vom Rahmen getragen wird. Insbesondere kann das Gewicht der Kurzschlusseinrichtung auch zur Gänze vom Rahmen getragen werden. Die elektrische Anbindung der Kurzschlusseinrichtung kann dann über (flexible) Drähte oder Kabel erfolgen.

Günstig ist es weiterhin, wenn der kleinste Abstand zwischen der zumindest einen Kurzschlusseinrichtung und den Stromschienen weniger als 100 mm beträgt. Dadurch kann der Schaltschrank sehr kompakt aufgebaut werden.

Von besonderem Vorteil ist es auch, wenn die zumindest eine über den Rahmen hinausragende Kurzschlusseinrichtung mit einer über den Rahmen hinausragenden Haube abgedeckt ist. Mit der Haube können der Schaltschrank und die Kurzschlusseinrichtung gegen äußere Einflüsse geschützt werden, und es kann damit auch eine erforderliche IP-Schutzart realisiert werden. Vorzugsweise wird die Haube auf den Schaltschrank aufgesetzt und mit dem Rahmen verschraubt. Bei Bedarf, beispielsweise im Wartungsfall der Kurzschlusseinrichtung, kann die Haube abgenommen werden. Die Haube kann zum Beispiel als Blechteil ausgeführt sein oder aber auch aus Kunststoff geformt sein.

Günstig ist es auch, wenn eine Ausfallwahrscheinlichkeit der im genannten Aufnahmebereich angeordneten Kurzschlusseinrichtung größer ist als eine Ausfallwahrscheinlichkeit einer weiteren, außerhalb des genannten Aufnahmebereichs im Schaltschrank angeordneten Kurzschlusseinrichtung und/oder wenn eine Auslösewahrscheinlichkeit der im genannten Aufnahmebereich angeordneten Kurzschlusseinrichtung größer ist als eine Auslösewahrscheinlichkeit einer weiteren, außerhalb des genannten Aufnahmebereichs im Schaltschrank angeordneten Kurzschlusseinrichtung. Dadurch bleiben Kurzschlusseinrichtungen mit hoher Ausfallwahrscheinlichkeit und/oder Auslösewahrscheinlichkeit gut wartbar und austauschbar. Die weitere Kurzschlusseinrichtung kann insbesondere vollständig innerhalb des Rahmens angeordnet sein. Fällt die Kurzschlusseinrichtung schon nach einer einzigen Auslösung aus und muss getauscht werden, dann ist die Ausfallwahrscheinlichkeit gleich der Auslösewahrscheinlichkeit. Ein Kurzschlusseinrichtung kann aber auch so aufgebaut sein, dass sie mehrere Kurzschlüsse löschen kann, bevor sie ausfällt und getauscht werden muss. Die Auslösewahrscheinlichkeit der Kurzschlusseinrichtung ist dann dementsprechend höher als deren Ausfallwahrscheinlichkeit.

Generell ist es von Vorteil für die offenbarten modularen Systeme, wenn die Rahmen des ersten Schaltschranks und des zweiten Schaltschranks identisch aufgebaut sind. Der Vorteil des modularen Systems tritt dann besonders zu Tage.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: einen beispielhaften Schaltschrank mit abgenommenen Seitenwänden;
- Fig. 2: den Schaltschrank aus Fig. 1 mit abgenommener Haube;
- Fig. 3: einen Detailansicht des Schaltschranks aus Fig. 1 mit ausgeblendetem Rahmen;
- Fig. 4: die über den Stromschienen montierte Kurzschlusseinrichtung in Detailansicht und
- Fig. 5: wie Fig. 4, nur mit ausgeblendeten Stromschienen.

### DETAILIERTE BESCHREIBUNG DER ERFINDUNG

Im Folgenden werden gleiche oder ähnliche Teile in den unterschiedlichen Ausführungsformen mit gleichen oder ähnlichen Bezugszeichen und Bezeichnungen versehen werden. Die auf gleiche oder ähnliche Teile bezogene Offenbarungen sind demgemäß untereinander austauschbar. Lageangaben, wie zum Beispiel "oben", "unten", "seitlich" usw. auf die unmittelbar beschriebene sowie dargestellte Figur bezogen und bei einer Lageänderung sinngemäß auf die neue Lage zu übertragen.

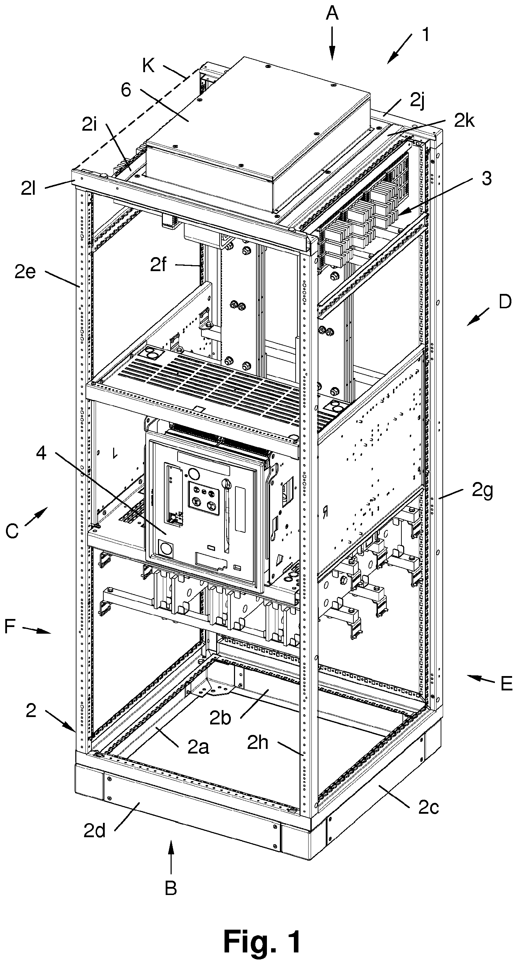

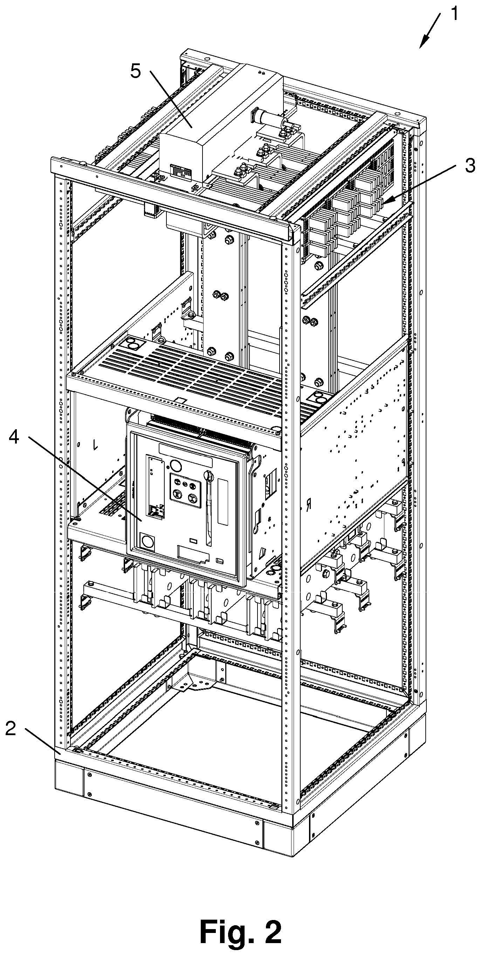

Die Figuren 1 bis 5 zeigen eine vorteilhafte Ausführungsform der Erfindung. Konkret zeigen die Figuren 1 und 2 einen beispielhaften Schaltschrank 1 mit abgenommenen Seitenwänden.

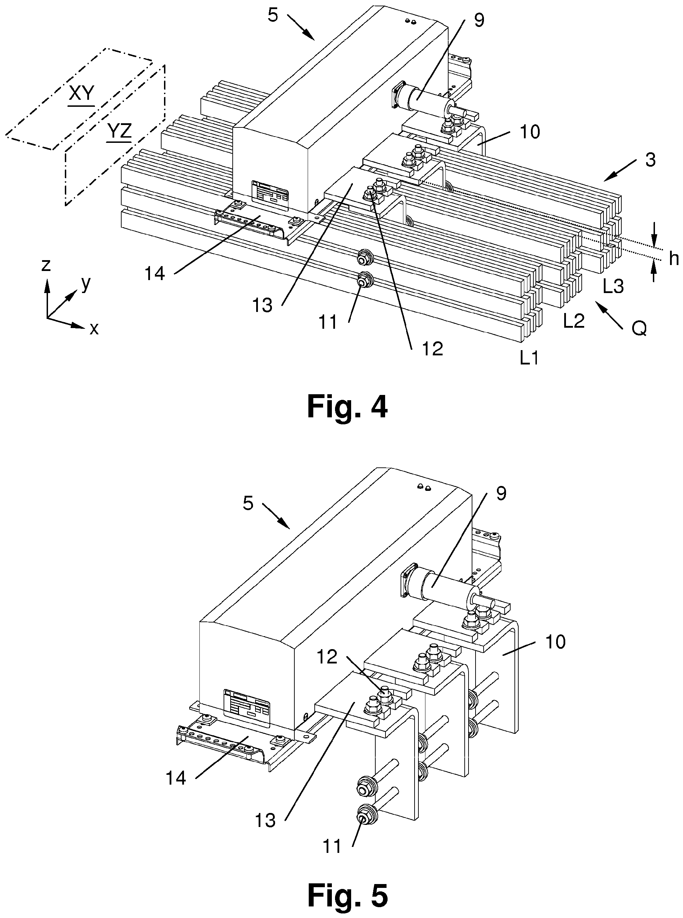

Der Schaltschrank 1 umfasst einen Rahmen 2, mehrere innerhalb des Rahmens 2 verlaufende Stromschienen 3, welche hier im oberen Bereich des Rahmens 2 verlaufen, und ein innerhalb des Rahmens 2 angeordnetes, optionales, elektrisches Schaltgerät 4, welches mit den Stromschienen 3 elektrisch verbunden ist. Die Fig. 2 zeigt zudem eine oberhalb der Stromschienen 3 angeordnete Kurzschlusseinrichtung 5 zum Löschen eines Lichtbogens, die über den Rahmen 2 vertikal hinausragt. Die Fig. 1 zeigt darüber hinaus eine die Kurzschlusseinrichtung 5 abdeckende Haube 6, mit welcher der Schaltschrank 1 und die Kurzschlusseinrichtung 5 gegen äußere Einflüsse geschützt werden können beziehungsweise mit der eine geforderte IP-Schutzart realisiert werden kann. Vorzugsweise ist die Haube 6 mit dem Rahmen 2 verschraubt und kann bei Bedarf abgenommen werden. Die Haube 6 ragt ebenfalls über den Rahmen 2 vertikal hinaus und ist im vorliegenden Beispiel sogar vollständig außerhalb des Rahmens 2 angeordnet. Die Kurzschlusseinrichtung 5 ist, wie in diesem Beispiel dargestellt, vorteilhaft direkt oberhalb der Stromschienen 2 positioniert und direkt mit den Stromschienen 3 elektrisch verbunden. Vorteilhaft beträgt der Vertikalabstand h zwischen der Kurzschlusseinrichtung 5 und den Stromschienen 3 weniger als 100 mm (siehe auch Fig. 4).

Der Schaltschrank 1weist eine Oberseite A, eine Unterseite B, eine Vorderseite C, eine Rückseite D, eine rechte Seitenfläche E und eine linke Seitenfläche F auf. Der Rahmen 2 des Schaltschranks 1 umfasst untere, horizontale Rahmenprofile 2a..2d, vertikale Rahmenprofile 2e..2h sowie obere, horizontale Rahmenprofile 2i..2l, die an ihren Enden verbunden sind. Auf den Rahmen 2 werden Paneele oder Wände montiert, welche die Außenkontur des Schaltschranks 1 bilden, wodurch ein abgeschlossener Hohlraum entsteht. In den Figuren sind diese Paneele oder Wände jedoch nicht dargestellt, um den Blick in das Innere des Schaltschranks 1 zu ermöglichen.

Die Paneele oder Wände bilden eine im Wesentlichen quaderförmige Außenkontur des Schaltschranks 1. Die äußeren Kanten das Rahmens 2 bilden ebenfalls eine quaderförmige Außenkontur K, die wegen der Dicke der Paneele oder Wände jedoch etwas kleiner als die Außenkontur des Schaltschranks 1 ist. Der Rahmen 2 ist der quaderförmigen Außenkontur des Schaltschranks 1 demnach eingeschrieben.

Da die beiden oberen Rahmenprofile 2i und 2k in dem gezeigten Beispiel etwas nach innen versetzt sind, wird die Quaderform des Rahmens 2 durch eine strichliert Linie ergänzt. Die beiden oberen Rahmenprofile 2i und 2k könnten aber natürlich ebenso an den Kanten der quaderförmigen Außenkontur K angeordnet sein.

Ein Vorteil der vorgeschlagenen Maßnahmen liegt in der vergleichsweise einfach zu realisierenden Anbindung der Kurzschlusseinrichtung 5 an eine Stromversorgung. Durch die genannten Maßnahmen ist auch der Zugang zu der Kurzschlusseinrichtung 5 auf einfache Weise möglich. Dazu muss lediglich die Haube 6 vom Rahmen 2 abgenommen werden. Innerhalb des Schaltschranks 2 müssen dazu jedoch keine weiteren Komponenten entfernt werden, insbesondere wenn keine weiteren oberhalb der Kurzschlusseinrichtung 5 liegenden, Komponenten elektrisch mit den Stromschienen 3 verbunden sind. Dies ist deshalb von besonderem Vorteil, weil die Kurzschlusseinrichtung 5 in der Regel nur einmal oder einige wenige Male aktiviert werden kann und es danach ersetzt oder gewartet werden muss. Durch die vorgeschlagenen Maßnahmen ist ein einfacher Zugang zur Kurzschlusseinrichtung 5 ermöglicht, um den Schaltschrank 1 wieder schnell in Betrieb nehmen zu können. Ein weiterer Vorteil liegt auch darin, dass die Kurzschlusseinrichtung 5 durch die vorgeschlagenen Maßnahmen leicht in bestehenden Schaltschränken 1 nachgerüstet werden kann. Dies ist insbesondere dann der Fall, wenn die Kurzschlusseinrichtung 5 wie in den Figuren dargestellt, über den Rahmen 2 des Schaltschranks 1 hinausragen kann.

Bei der dargestellten Variante ist der Rahmen 2 des Schaltschranks 1 im Hinblick auf seine Größe so ausgeführt, dass eigentlich keine oberhalb der Stromschienen 3 liegende Kurzschlusseinrichtung 5 im Inneren des Rahmens 2 aufgenommen werden kann, insbesondere wenn - so wie im gezeigten Beispiel - die Stromschienen 3 im obersten Bereich des Rahmens 2 angeordnet beziehungsweise durch den Schaltschrank 1 hindurch geführt sind. Mit diesem Rahmen 2 können die meisten in der Praxis auftretenden Anwendungsfälle abgedeckt werden, bei denen eben keine Kurzschlusseinrichtung 5 verbaut ist. Der Schaltschrank 1 ist dadurch sehr kompakt. Ist jedoch der Einsatz einer Kurzschlusseinrichtung 5 gefordert, so wird diese, wie in den Figuren gezeigt, oberhalb der Stromschienen 3 angeordnet, wodurch sie vertikal über den Rahmen 2 hinaus ragt.

Dadurch ergibt sich ein modulares System, welches einen ersten Schaltschrank 1 und einen zweiten Schaltschrank umfasst. Die Schaltschränke weisen jeweils einen Rahmen 2 auf, mehrere im oberen Bereich des Rahmens 2 verlaufende Stromschienen 3 sowie ein innerhalb des Rahmens 2 angeordnetes, optionales, elektrisches Schaltgerät 4, welches mit den Stromschienen 3 elektrisch verbunden ist. Der erste Schaltschrank 1 weist zusätzlich eine oberhalb der Stromschienen 3 angeordnete und insbesondere über den Rahmen 2 vertikal hinausragende Kurzschlusseinrichtung 5 auf (vergleiche die Figuren 1 und 2). Der zweite Schaltschrank ist dagegen ohne eine solche Kurzschlusseinrichtung 5 aufgebaut. Der zweite Schaltschrank kann daher im Prinzip oben mit einer ebenen Platte abgedeckt werden. Vorteilhaft sind die Rahmen 2 des ersten Schaltschranks 1 und einen zweiten Schaltschranks identisch aufgebaut. Der Vorteil des modularen Systems tritt dann besonders zu Tage.

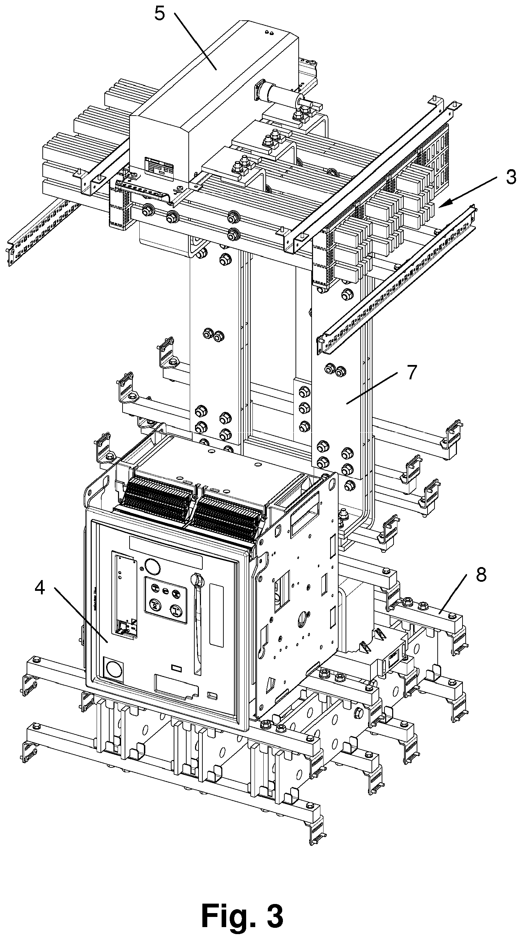

Fig. 3 zeigt ergänzend einen Ausschnitt aus dem Schaltschrank 1, bei dem der Rahmen 2 zwecks besserer Sichtbarkeit auf das Innere des Schaltschranks 1 weggelassen wurde. Konkret sind in der Fig. 3 die Verbindungsschienen 7 zwischen den Stromschienen 3 und dem elektrischen Schaltgerät 4 sowie Tragelemente 8 zur mechanischen Anbindung des elektrischen Schaltgeräts 4 an den Rahmen 2 deutlich zu sehen.

Die Figuren 4 und 5 zeigen einen weiteren, noch detaillierteren Ausschnitt aus dem Schaltschrank 1. Konkret ist in der Fig. 4 die oberhalb der Stromschienen 3 montierte Kurzschlusseinrichtung 5 zu sehen und in der Fig. 5 die Kurzschlusseinrichtung 5 mit den Verbindungselementen zu den Stromschienen 3, nicht jedoch die Stromschienen 3 selbst. Fig. 4 zeigt auch den in dieser Darstellung sichtbaren Querschnitt Q der Stromschienen 3.

Die Stromschienen 3 weisen eine in x-Richtung verlaufende Längserstreckung/Längsrichtung auf, und Stromschienen 3 unterschiedlicher Phasen L1, L2 und L3 sind in einer dazu normal ausgerichteten Quererstreckung/Querrichtung y nebeneinander angeordnet. Durch die genannte Längserstreckung x und die genannte Quererstreckung y ist eine in x/y-Richtung ausgerichtete erste Zugangsebene XY definiert, in welcher die Stromschienen 3 aller Phasen L1, L2 und L3 liegen. Sofern die Stromschienen 3 innerhalb des Rahmens 2 enden, ist auch eine zweite Zugangsebene YZ definiert, die entlang der Quererstreckung y und einer normal auf die Längserstreckung x und die Quererstreckung y liegenden Hochrichtung z ausgerichtet ist. In dieser zweiten Zugangsebene YZ liegen ebenfalls die Stromschienen 3 aller Phasen L1, L2 und L3. Eine Richtung eines in den Stromschienen 3 fließenden Stroms ist parallel zu der ersten Zugangsebene XY, konkret in x-Richtung, und normal auf die optionale zweite Zugangsebene YZ ausgerichtet.

Die erste Zugangsebene XY und die optionale zweite Zugangsebene YZ definieren Ebenen, in denen alle über die Stromschienen 3 geführten Phasen L1, L2 und L3 von einer Seite zugänglich sind, wodurch die Kurzschlusseinrichtung 5 leicht an die Stromschienen 3 angebunden werden kann. In dem dargestellten Beispiel ist die Kurzschlusseinrichtung 5 in einem Aufnahmebereich angeordnet ist, welcher in Richtung zur nächst gelegenen, parallel zu der ersten Zugangsebene XY ausgerichteten Quaderfläche der quaderförmigen Außenkontur des Schaltschranks 1 angrenzt. Im gegebenen Beispiel ist dies die Oberseite A des Schaltschranks 1 (Fall a).

Gleichwertig könnte die Kurzschlusseinrichtung 5 in einem Aufnahmebereich angeordnet sein, welcher in Richtung zur nächst gelegenen, parallel zu der zweiten Zugangsebene YZ ausgerichteten Quaderfläche der quaderförmigen Außenkontur des Schaltschranks 1 angrenzt. Für das Beispiel wird angenommen, dass die Stromschienen 3 an der Seitenfläche E des Schaltschranks 1 enden. Demnach ist die relevante Quaderfläche die Seitenfläche E des Schaltschranks 1. Enden die Stromschienen 3 an der Seitenfläche F des Schaltschranks 1, dann wäre die relevante Quaderfläche die Seitenfläche F des Schaltschranks 1.

Die Stromschienen 3 unterschiedlicher Phasen L1, L2 und L3 können auch in einer zur x-Richtung normal ausgerichteten Hochrichtung z nebeneinander beziehungsweise übereinander angeordnet sein. Die erste Zugangsebene würde dann in x/z-Richtung ausgerichtet sein. Die relevante Quaderfläche wäre dann die Rückseite D des Schaltschranks 1. Die zweite Zugangsebene YZ bleibt in diesem Beispiel in y/z-Richtung ausgerichtet. Für eine Kurzschlusseinrichtung 5, welche an einer Seitenfläche E, F des Schaltschranks 1 ausgerichtet ist, gilt das oben Gesagte in entsprechender Weise.

Schließlich wäre auch vorstellbar, dass die Längserstreckung der Stromschienen 3 in y-Richtung oder in z-Richtung ausgerichtet ist. Verlaufen die Stromschienen 3 in y-Richtung, dann können die Stromschienen 3 unterschiedlicher Phasen L1, L2 und L3 in x-Richtung oder in z-Richtung nebeneinander angeordnet sein. Die Kurzschlusseinrichtung 5 könnte dann wieder an der Oberseite A des Schaltschranks 1, an der Rückseite D des Schaltschranks 1 oder an den Seitenflächen E, F des Schaltschranks 1 angeordnet sein.

Verlaufen die Stromschienen 3 in z-Richtung, dann können die Stromschienen 3 unterschiedlicher Phasen L1, L2 und L3 in x-Richtung oder in y-Richtung nebeneinander angeordnet sein. Die Kurzschlusseinrichtung 5 könnte dann wieder an der Oberseite A des Schaltschranks 1, an der Rückseite D des Schaltschranks 1 oder an den Seitenflächen E, F des Schaltschranks 1 angeordnet sein.

In dem in den Figuren gezeigten Beispiel ist ein in den Stromschienen 3 fließender Strom parallel zur ersten Zugangsebene XY ausgerichtet, beziehungsweise ist ein Aufnahmebereich für die Kurzschlusseinrichtung 5 parallel zu der ersten Zugangsebene XY oder parallel zu der zweiten Zugangsebene YZ ausgerichtet. Dies ist zwar vorteilhaft, jedoch kann die jeweilige Ausrichtung auch um bis zu 10°von einer parallelen Ausrichtung abweichen.

In dem in den Figuren gezeigten Beispiel umfasst der Schaltschrank 1 eine Kurzschlusseinrichtung 5 an einer Oberseite A des Schaltschrank 1 (Fall a). Wie erwähnt ist aber auch denkbar, dass das die Kurzschlusseinrichtung 5 oder eine zusätzliche Kurzschlusseinrichtung 5 an einer Rückseite D des Schaltschranks 1 angeordnet ist (Fall b) oder an einer Seitenfläche E, F des Schaltschranks 1.

In dem in den Figuren dargestellten Beispiel ragt die Kurzschlusseinrichtung 5 über den Rahmen 2 hinaus. Dies ist aber keine zwingende Bedingung. Die erfindungsgemäßen Vorteile werden auch dann erzielt, wenn die Kurzschlusseinrichtung 5 in dem an die Stromschienen 3 angrenzenden Aufnahmebereich angeordnet ist, jedoch nicht über den Rahmen 2 hinausragt.

Die Kurzschlusseinrichtung 5 befindet sich in beiden Fällen außerhalb des Raums im Schaltschrank 1, der üblicherweise für Einbauten vorgesehen ist und der in den Figuren unterhalb der Stromschienen 3 angeordnet ist.

Insbesondere kann weiterhin vorgesehen sein, dass
- die Stromschienen 3 im Fall a) im obersten Viertel des Rahmens 2 angeordnet sind und die zumindest eine Kurzschlusseinrichtung 5 oberhalb der Stromschienen 3 angeordnet ist oder
- die Stromschienen 3 im Fall b) im hintersten Viertel des Rahmens 2 angeordnet sind und die zumindest eine Kurzschlusseinrichtung 5 hinter den Stromschienen 3 angeordnet ist oder
- die Stromschienen 3 im Fall c) in einem einer Seitenwand des Schaltschranks 1 zugewandten Viertel des Rahmens 2 angeordnet sind und die zumindest eine Kurzschlusseinrichtung 5 seitlich neben den Stromschienen 3 angeordnet ist.

Denkbar ist auch, dass die Kurzschlusseinrichtung 5 nicht, wie für den Fall a) konkret dargestellt, direkt oberhalb der Stromschienen 2 angeordnet ist, sondern im Fall b) direkt hinter den Stromschienen 3 und im Fall c) direkt neben den Stromschienen 2 positioniert ist. Das heißt, zwischen den Stromschienen 3 und der Kurzschlusseinrichtung 5 befinden sich keine weiteren, elektrisch mit den Stromschienen 3 verbunden Komponenten.

Denkbar ist weiterhin, dass der Schaltschrank 1 nicht nur eine Kurzschlusseinrichtung 5 umfasst, so wie das in den Figuren dargestellt ist, sondern mehrere. Dabei können alle Kurzschlusseinrichtungen 5 entsprechend dem Fall a), alle Kurzschlusseinrichtungen 5 entsprechend dem Fall b) oder alle Kurzschlusseinrichtungen 5 entsprechend dem Fall c) im Schaltschrank 1 angeordnet sein. Denkbar sind natürlich auch Mischfälle, das heißt wenigstens zwei der Fälle a), b) und c) treten dann gemeinsam auf. Weiterhin ist vorstellbar, dass zusätzlich zu der zumindest einen, in dem an die Stromschienen 3 angrenzenden Aufnahmebereich angeordneten und insbesondere über den Rahmen 2 ragenden, Kurzschlusseinrichtung 5 weitere außerhalb des genannten Aufnahmebereichs und insbesondere vollständig innerhalb des Rahmens 2 angeordnete Kurzschlusseinrichtungen 5 vorgesehen sind. Vorzugsweise ist die Ausfallwahrscheinlichkeit und/oder Auslösewahrscheinlichkeit der außerhalb des genannten Aufnahmebereichs angeordneten Kurzschlusseinrichtung 5 kleiner als jene der im Aufnahmebereich angeordneten Kurzschlusseinrichtung 5.

Generell kann der kleinste Abstand h zwischen der Kurzschlusseinrichtung 5 und den Stromschienen 3 weniger als 100 mm betragen.

Die grundlegende Funktion einer Kurzschlusseinrichtung 5 wurde bereits weiter oben beschrieben. Die zugehörige Sensorik, also zum Beispiel Strommeßsensoren und lichtempfindliche Sensoren können direkt in der Kurzschlusseinrichtung 5 angeordnet sein oder (zumindest teilweise) extern angeordnet und mit der Kurzschlusseinrichtung 5 verbunden sein, beispielsweise über den externen Anschluss 9.

Wie bereits erwähnt, kann die Kurzschlusseinrichtung 5 durch die besondere Anordnung nach einem Fehlerfall leicht ausgetauscht oder gewartet werden. Die Schalter zum Löschen eines Lichtbogens sind ja in der Regel nur zum Löschen eines einzigen Lichtbogens oder einiger weniger Lichtbogen geeignet.

Die elektrische Verbindung zwischen der Kurzschlusseinrichtung 5 und den Stromschienen 3 ist in dem gezeigten Beispiel mit Flachprofilen 10 hergestellt.

Diese Flachprofile 10 weisen einen rechteckigen bzw. im Wesentlichen rechteckförmigen Querschnitt auf und können in Längsrichtung gerade oder bogenförmig verlaufen oder aber auch im Längsverlauf einfach oder mehrfach abgewinkelt sein. In dem gezeigten Beispiel ist die elektrische Verbindung zwischen der Kurzschlusseinrichtung 5 und den Stromschienen 3 konkret mit einem Flachprofil 10 hergestellt, das in seinem Längsverlauf eine Abkantung um 90° aufweist. Die Flachprofile 10 sind dazu einerseits mit Hilfe von Schrauben 11 mit den Stromschienen 3 verschraubt, andererseits auch mit Hilfe von Schrauben 12 mit Anschlusslaschen 13 der Kurzschlusseinrichtung 5.

Die Vorteile und Ausführungsvarianten, die mit der elektrischen Verbindung zwischen der Kurzschlusseinrichtung 5 und den Stromschienen 3 mithilfe von Flachprofilen 10 zusammenhängen, wurden bereits weiter oben beschrieben. Insbesondere kann eine Kurzschlusseinrichtung 5 mit starren elektrischen Leitern mit den Stromschienen 3 verbunden werden.

Bei der in den Figuren gezeigten Variante ist die Kurzschlusseinrichtung 5 jedoch (auch) am Rahmen 2 befestigt. Konkret ist dazu ein Befestigungswinkel 14 vorgesehen, mit dessen Hilfe die Kurzschlusseinrichtung 5 mit dem Rahmen 2 des Schaltschrankes 1 verbunden ist.

Grundsätzlich kann das Gewicht der Kurzschlusseinrichtung 5 auch zur Gänze vom Rahmen 2 getragen werden, etwa indem die gesamte, von der Kurzschlusseinrichtung 5 herrührende, Gewichtskraft über den Befestigungswinkel 14 in den Rahmen 2 eingeleitet wird. Die elektrische Anbindung der Kurzschlusseinrichtung 5 kann dann über (flexible) Drähte oder Kabel erfolgen.

In dem in den Figuren dargestellten Beispiel sind die Stromschienen 3 den drei Phasen L1..L3 eines Wechselspannungssystems zugeordnet. Denkbar wäre aber auch, dass im Schaltschrank 1 ein Nullleiter vorgesehen ist, der eine Stromschienen 3 oder mehrere Stromschienen 3 umfasst. Die Kurzschlusseinrichtung 5 kann in diesem Fall mit dem Nullleiter elektrisch verbunden sein, oder die Kurzschlusseinrichtung 5 ist trotz vorhandenem Nullleiter lediglich mit den drei Phasen L1..L3 des Wechselspannungssystems verbunden.

Abschließend wird angemerkt, dass der Schaltschrank 1 respektive dessen Bauteile nicht notwendigerweise maßstäblich dargestellt ist und dieser daher auch andere Proportionen aufweisen kann. Weiterhin kann der Schaltschrank 1 auch mehr oder weniger Komponenten als dargestellt umfassen. Schließlich wird angemerkt, dass sich die obigen Ausgestaltungen und Weiterbildungen der Erfindung auf beliebige Art und Weise kombinieren lassen.

### Bezugszeichenliste

- 1: Schaltschrank
- 2: Rahmen
- 2a..2l: Rahmenprofile
- 3: Stromschiene
- 4: elektrisches Schaltgerät
- 5: Kurzschlusseinrichtung

- 6: Haube
- 7: Verbindungsschiene
- 8: Tragelement
- 9: externer Anschluss
- 10: Flachprofil (Stromschienenanbindung)

- 11: Schraube
- 12: Schraube
- 13: Anschlusslasche
- 14: Befestigungswinkel

- A: Oberseite des Schaltschranks
- B: Unterseite des Schaltschranks
- C: Vorderseite des Schaltschranks
- D: Rückseite des Schaltschranks
- E: rechte Seitenfläche des Schaltschranks

- F: linke Seitenfläche des Schaltschranks
- Q: Querschnitt der Stromschienen
- K: Außenkontur des Rahmens
- h: Vertikalabstand Kurzschlusseinrichtung / Stromschienen
- XY: erste Zugangsebene
- YZ: zweite Zugangsebene

- L1: L1-Phase
- L2: L2-Phase
- L3: L3-Phase

- x: x-Richtung (Längsrichtung)
- y: y-Richtung (Querrichtung)
- z: z-Richtung (Hochrichtung)

## Patentansprüche

1. Schaltschrank (1), umfassend
- einen Rahmen (2), welcher mehrere Rahmenprofile (2a..2l) aufweist und in eine im Wesentlichen quaderförmiger Außenkontur des Schaltschranks (1) eingeschrieben ist,
- mehrere innerhalb des Rahmens (2) verlaufende und mehreren Phasen (L1, L2, L3) zugeordnete Stromschienen (3) mit einem Gesamtquerschnitt (Q) von wenigstens 300 mm² und
- zumindest eine Kurzschlusseinrichtung (5) zum Löschen eines Lichtbogens, welche mit den Stromschienen (3) elektrisch verbunden ist,
- wobei die Stromschienen (3) eine Längserstreckung (x) aufweisen,
- wobei die Stromschienen (3) unterschiedlicher Phasen (L1, L2, L3) in einer dazu normal ausgerichteten Quererstreckung (y) nebeneinander angeordnet sind,
- wobei durch die genannten Längserstreckung (x) und die genannte Quererstreckung (y) eine erste Zugangsebene (XY) definiert ist und in dieser ersten Zugangsebene (XY) Stromschienen (3) aller Phasen (L1, L2, L3) liegen,
- wobei, sofern die Stromschienen (3) innerhalb des Rahmens (2) enden, eine zweite Zugangsebene (YZ) definiert ist, die entlang der Längserstreckung (x) und einer normal auf die Längserstreckung (x) und Quererstreckung (y) verlaufenden Richtung (z) ausgerichtet ist, und wobei in dieser zweiten Zugangsebene (YZ) Stromschienen (3) aller Phasen (L1, L2, L3) liegen,
**dadurch gekennzeichnet, dass**
- die Kurzschlusseinrichtung (5) in einem Aufnahmebereich angeordnet ist, welcher in Richtung zur nächst gelegenen, im Wesentlichen parallel zu der ersten Zugangsebene (XY) oder im Wesentlichen parallel zu der zweiten Zugangsebene (YZ) ausgerichteten Quaderfläche (A, D, E, F) der quaderförmigen Außenkontur des Schaltschranks (1) an die Stromschienen (3) angrenzt.

2. Schaltschrank (1) nach Anspruch 1, **dadurch gekennzeichnet, dass** die zumindest eine Kurzschlusseinrichtung (5)
a) an einer Oberseite (A) des Schaltschranks (1) oder
b) an einer Rückseite (D) des Schaltschranks (1) oder
c) an einer Seitenfläche (E, F) des Schaltschranks (1) angeordnet ist.

3. Schaltschrank (1) nach Anspruch 2, **dadurch gekennzeichnet, dass**
- die Stromschienen (3) im Fall a) im obersten Viertel des Rahmens (2) angeordnet sind und die zumindest eine Kurzschlusseinrichtung (5) oberhalb der Stromschienen (3) angeordnet ist oder
- die Stromschienen (3) im Fall b) im hintersten Viertel des Rahmens (2) angeordnet sind und die zumindest eine Kurzschlusseinrichtung (5) hinter den Stromschienen (3) angeordnet ist oder
- die Stromschienen (3) im Fall c) in einem einer Seitenwand des Schaltschranks (1) zugewandten Viertel des Rahmens (2) angeordnet sind und die zumindest eine Kurzschlusseinrichtung (5) seitlich neben den Stromschienen (3) angeordnet ist.

4. Schaltschrank (1) nach Anspruch 2 oder 3, **dadurch gekennzeichnet, dass** die zumindest eine Kurzschlusseinrichtung (5) im Fall a) direkt oberhalb, im Fall b) direkt hinter und im Fall c) direkt neben den Stromschienen (2) positioniert ist.

5. Schaltschrank (1) nach einem der Ansprüche 1 bis 4, **dadurch gekennzeichnet, dass** im Fall a) keine weiteren oberhalb, im Fall b) hinter und im Fall c) seitlich der zumindest einen Kurzschlusseinrichtung (5) liegenden, Komponenten elektrisch mit den Stromschienen (3) verbunden sind.

6. Schaltschrank (1) nach einem der Ansprüche 1 bis 5, **dadurch gekennzeichnet, dass** das Gewicht der Kurzschlusseinrichtung (5) im Wesentlichen von den Stromschienen (3) getragen wird.

7. Schaltschrank (1) nach einem der Ansprüche 1 bis 6, **dadurch gekennzeichnet, dass** der kleinste Abstand (h) zwischen der zumindest einen Kurzschlusseinrichtung (5) und den Stromschienen (3) weniger als 100 mm beträgt.

8. Schaltschrank (1) nach einem der Ansprüche 1 bis 7, **dadurch gekennzeichnet, dass** die zumindest eine Kurzschlusseinrichtung (5) vollständig innerhalb des Rahmens (2) angeordnet ist.

9. Schaltschrank (1) nach einem der Ansprüche 1 bis 7, **dadurch gekennzeichnet, dass** die zumindest eine Kurzschlusseinrichtung (5) wenigstens teilweise über den Rahmen (2) hinausragt.

10. Schaltschrank (1) nach Anspruch 9, **dadurch gekennzeichnet, dass** die zumindest eine Kurzschlusseinrichtung (5) mit einer über den Rahmen (2) hinausragenden Haube (6) abgedeckt ist.

11. Schaltschrank (1) nach einem der Ansprüche 1 bis 10, **dadurch gekennzeichnet, dass** eine Ausfallwahrscheinlichkeit der im genannten Aufnahmebereich angeordneten Kurzschlusseinrichtung (5) größer ist als eine Ausfallwahrscheinlichkeit einer weiteren, außerhalb des genannten Aufnahmebereichs im Schaltschrank (1) angeordneten Kurzschlusseinrichtung und /oder dass eine Auslösewahrscheinlichkeit der im genannten Aufnahmebereich angeordneten Kurzschlusseinrichtung (5) größer ist als eine Auslösewahrscheinlichkeit einer weiteren, außerhalb des genannten Aufnahmebereichs im Schaltschrank (1) angeordneten Kurzschlusseinrichtung (5).

12. Schaltschrank (1) nach einem der Ansprüche 1 bis 11, **dadurch gekennzeichnet, dass** die weitere Kurzschlusseinrichtung vollständig innerhalb des Rahmens (2) angeordnet ist.

13. Modulares System, umfassend einen ersten Schaltschrank (1) und einen zweiten Schaltschrank, jeweils aufweisend
- einen Rahmen (2), welcher mehrere Rahmenprofile (2a..2l) umfasst und in eine im Wesentlichen quaderförmiger Außenkontur des Schaltschranks (1) eingeschrieben ist,
- mehrere innerhalb des Rahmens (2) verlaufende und mehreren Phasen (L1, L2, L3) zugeordnete Stromschienen (3) mit einem Gesamtquerschnitt (Q) von wenigstens 300 mm²,
- wobei die Stromschienen (3) eine Längserstreckung (x) aufweisen,
- wobei die Stromschienen (3) unterschiedlicher Phasen (L1, L2, L3) in einer dazu normal ausgerichteten Quererstreckung (y) nebeneinander angeordnet sind,
- wobei durch die genannten Längserstreckung (x) und die genannte Quererstreckung (y) eine erste Zugangsebene (XY) definiert ist und in dieser ersten Zugangsebene (XY) Stromschienen (3) aller Phasen (L1, L2, L3) liegen,
- wobei, sofern die Stromschienen (3) innerhalb des Rahmens (2) enden, eine zweite Zugangsebene (YZ) definiert ist, die entlang der Längserstreckung (x) und einer normal auf die Längserstreckung (x) und Quererstreckung (y) verlaufenden Richtung (z) ausgerichtet ist, und wobei in dieser zweiten Zugangsebene (YZ) Stromschienen (3) aller Phasen (L1, L2, L3) liegen,
**dadurch gekennzeichnet, dass**
- der erste Schaltschrank (1) zumindest eine Kurzschlusseinrichtung (5) zum Löschen eines Lichtbogens aufweist, welche mit den Stromschienen (3) elektrisch verbunden ist und welche in einem Aufnahmebereich angeordnet ist, welcher in Richtung zur nächst gelegenen, im Wesentlichen parallel zu der ersten Zugangsebene (XY) oder im Wesentlichen parallel zu der zweiten Zugangsebene (YZ) ausgerichteten Quaderfläche (A, D, E, F) der quaderförmigen Außenkontur des ersten Schaltschranks (1) an die Stromschienen (3) angrenzt und
- der zweite Schaltschrank ohne eine in diesem Aufnahmebereich angeordnete Kurzschlusseinrichtung (5) aufgebaut ist.

14. Modulares System nach Anspruch 13, **dadurch gekennzeichnet, dass**
- der erste Schaltschrank (1) zumindest eine Kurzschlusseinrichtung (5) aufweist, welche wenigstens teilweise über den Rahmen (2) hinausragt und
- der zweite Schaltschrank ohne eine über den Rahmen (2) hinausragende Kurzschlusseinrichtung (5) aufgebaut ist.

15. Modulares System nach Anspruch 13 oder 14, **dadurch gekennzeichnet, dass** die Rahmen (2) der beiden Schaltschränke (1) identisch aufgebaut sind.
